# EUROPÄISCHE PATENTSCHRIFT

(11) **EP 1 214 541 B1**
(45) Veröffentlichungstag und Bekanntmachung des Hinweises auf die Patenterteilung: **17.03.2004**
(21) Anmeldenummer: 00965818.8
(22) Anmeldetag: 05.09.2000
(51) Int. Cl.: F16K 27/06, F16K 5/02, F16K 5/04, F16K 5/06

(54) **HAHN-EINSATZ**
TAP INSERT
INSERT DE ROBINET

(30) Priorität: 06.09.1999 DE 19942340
(43) Veröffentlichungstag der Anmeldung: 19.06.2002
(73) Patentinhaber: Brombach, Frank, 79618 Rheinfelden (DE)
(72) Erfinder: Brombach, Frank, 79618 Rheinfelden (DE)
(74) Vertreter: Lucht, Silvia
(86) Internationale Anmeldenummer: PCT/DE2000/003051
(87) Internationale Veröffentlichungsnummer: WO 2001/018437

(56) Entgegenhaltungen:
- GB-A- 827 626
- US-A- 2 757 969
- US-A- 3 133 722
- US-A- 3 576 309
- US-A- 3 967 811
- US-A- 4 314 581
- US-A- 4 535 970

## Beschreibung

### Stand der Technik

Die Erfindung geht aus von einem Hahn-Einsatz zum Verschließen oder Abtrennen von Rohrleitungen nach dem Oberbegriff des Anspruchs 1.

Im Verteilungsnetz einer Wasserversorgungsanlage, einer Heizungsanlage oder einer Solaranlage beispielsweise in Gebäuden oder auf Baustellen, werden häufig von Hand betätigbare Absperrventile verwendet. Diese weisen ein Handrad auf, mit dem ein Ventilteller mit Dichtung geradlinig und senkrecht zum Ventilsitz in die Rohrleitung bewegt wird. Ein Nachteil derartiger Absperrventile besteht darin, daß sie sehr verschleißanfällig sind. Die Anzahl der Drehungen, die mit dem Handrad ausgeführt werden müssen, damit der Ventilteller dichtend auf dem Ventilsitz aufliegt, ist nicht fest vorgegeben. Dies führt dazu, daß das Ventil so stark zugedreht werden kann, daß die Dichtung des Ventiltellers beschädigt wird. Das Ventil dichtet daraufhin die Rohrleitung nicht mehr einwandfrei ab. Wird das Ventil über einen längeren Zeitraum nicht geöffnet oder treten hohe Wassertemperaturen auf, so ist das Ventil besonders verschleißanfällig. Dies führt dazu, daß die Ventileinsätze in den mit den Rohrleitungen verbundenen Ventilgehäusen häufig ausgetauscht werden müssen. Sind in einem Gebäude oder an einer Baustelle mehrere Absperrventile defekt, so muß zum Austausch der Ventileinsätze in einem Teil der Wasserversorgung das Wasser abgelassen werden. Dies ist mit großem Aufwand und hohen Kosten verbunden.

Um diese Nachteile zu umgehen, werden in Neubauten häufig anstelle der Absperrventile Hähne, insbesondere Kugelhähne, verwendet. Diese weisen einen kugeligen oder kegeligen Absperrkörper mit Durchgangskanal auf, wobei der Absperrkörper über einen Handhebel um einen fest vorgegebenen Winkel, meist 90 Grad, gedreht werden kann. Derartige Hähne sind nicht verschleißanfällig. Sie haben jedoch den Nachteil, daß sie an bereits vorhandenen, mit einem Absperrventil ausgestatteten Rohrleitungen nur mit sehr großem Aufwand eingebaut werden können. Häufig muß hierzu ein ganzes Rohrstück entfernt werden. Dies ist insbesondere bei im Mauerwerk fest verlegten Rohrleitungen von Nachteil.

Aus der US-A-4 314 581 ist ein gattungsgemäßer Hahn-Einsatz für Ventilgehäuse bekannt. Der Hahn-Einsatz wird in das Ventilgehäuse eingeschraubt. Das den Absperrkörper des Hahn-Einsatzes umgebende Absperrkörpergehäuse liegt dichtend an dem Ventilsitz des Ventilgehäuses an. Als nachteilig erweist sich, dass der Hahn-Einsatz an das Ventilgehäuse angepasst sein muss. Er kann nicht in beliebige Ventilgehäuse eingesetzt werden.

Aus US-A-3 133 722, US-A-3 967 811, GB-A-827 626 und US-A-2 757 969 sind Hahn-Einsätze mit einem Absperrkörper mit Durchgangskanal, einer Betätigungsvorrichtung für den Absperrkörper und einer Vorrichtung zum Verbinden des Hahn-Einsatzes mit einem Gehäuse in einer Rohrleitung bekannt. Diese Hahn-Einsätze eignen sich jedoch nicht zum Einsatz in Ventilgehäuse. Sie sind nicht an Ventilgehäuse angepasst.

Demgegenüber hat der Hahn-Einsatz mit den Merkmalen des Anspruchs 1 den Vorteil, daß er in ein Ventilgehäuse einschraubbar ist. Hierzu ist an der Außenseite der Vorrichtung zum Verbinden des Hahn-Einsatzes mit dem Gehäuse ein Außengewinde vorgesehen. Zum Austausch eines defekten Ventileinsatzes gegen einen derartigen Hahn-Einsatz muß der Ventileinsatz lediglich aus der Rohrleitung herausgeschraubt und der Hahn-Einsatz in die vorhandene Aufnahme eingeschraubt werden. Das den Absperrkörper des Hahn-Einsatzes umschließende Absperrkörpergehäuse weist an seiner Außenseite Anschlagsflächen auf, mit denen es dichtend an dem für den Ventilteller eines Ventileinsatzes vorgesehenen Ventilsitz des Ventilgehäuses anliegt. Befindet sich der Absperrkörper in der Schließstellung, so ist die Rohrleitung im Bereich des Hahn-Einsatzes vollständig verschlossen. Bei Durchlaßstellung des Absperrkörpers kann das in der Rohrleitung geführte Medium durch in dem Absperrkörpergehäuse vorgesehene Öffnungen und dem Durchgangskanal im Absperrkörper hindurchströmen. Die Rohrleitung ist damit im Bereich des Hahn-Einsatzes geöffnet.

Der Hahn-Einsatz ist in seiner Länge verstellbar. Dies ermöglicht ein Einstellen des Hahn-Einsatzes auf das Ventilgehäuse hinsichtlich des Abstandes zwischen dem Ventilsitz und Gewinde zum Einschrauben des Einsatzes. Der Hahn-Einsatz ist damit vielseitig einsetzbar und kann an jedes Ventilgehäuse optimal angepaßt werden. Die Länge des Hahn-Einsatzes wird beim Einsatz in das Ventilgehäuse eingestellt und fixiert. Solange der Hahn-Einsatz in dem Ventilgehäuse verbleibt, wird diese Länge nicht verändert. Hierdurch unterscheidet sich der Hahn-Einsatz von einem Ventileinsatz. Bei letzteren wird der Abstand zwischen dem Ventilteller und dem Gewinde, welches den Ventileinsatz mit dem Ventilgehäuse verbindet, bei jedem Öffnen und Schließen des Ventils verändert.

Zur Längenverstellung ist eine erste in der Vorrichtung zum Verbinden geführte Hülse vorgesehen. Durch diese Hülse hindurch erstreckt sich ein Stift, an dessen einem Ende der Absperrkörper und an dessen anderem Ende die Betätigungsvorrichtung vorgesehen ist. Eine zweite Hülse greift an der ersten an und ist über ein Gewinde an der Außenseite der Vorrichtung zum Verbinden an dem aus dem Ventilgehäuse herausragenden Ende geführt. Durch Verstellen der Position der zweiten Hülse an der Vorrichtung zum Verbinden ändert sich die Position der ersten Hülse in der Vorrichtung zum Verbinden und damit der Abstand zwischen dem Absperrkörpergehäuse und der Vorrichtung zum Verbinden.

Der Hahn-Einsatz eignet sich beispielsweise für Schrägsitz-Ventile, Freifluß-Ventile und Durchgangs-Ventile. Hierzu muß jeweils das Absperrkörpergehäuse an den Ventilsitz und der Abstand zwischen Absperrkörpergehäuse und der Vorrichtung zum Verbinden an den jeweiligen Ventilkörper angepaßt werden.

Nach einer vorteilhaften Ausgestaltung der Erfindung besteht das Absperrkörpergehäuse aus einem Dichtungsmaterial. Das Absperrkörpergehäuse dient damit als Verschluß des Durchgangskanals im Absperrkörper in der Schließstellung, als Führung des Absperrkörpers im Absperrkörpergehäuse und als Dichtung des Hahn-Einsatzes gegen das Austreten von Flüssigkeit. Außerdem wird der Übergang zwischen dem Absperrkörpergehäuse und dem Ventilsitz des Ventilgehäuses abgedichtet. Eine gesonderte Dichtung ist in diesem Fall nicht notwendig. Da der Absperrkörper eine glatte Oberfläche aufweist und die Dichtungsmaterialien eine Elastizität besitzen, kann der Absperrkörper außerdem ohne Reibungsverluste und damit ohne Verschleiß in dem Absperrkörper geführt werden. Vorteilhafterweise wird für die Dichtung ein Material gewählt, das gute Dichtungseigenschaften hat, und in dem der Absperrkörper mit geringer Reibung geführt werden kann. Hierzu eignet sich insbesondere Teflon. Der Absperrkörper besteht meist aus Metall, beispielsweise Edelstahl, Messing oder Rotguß mit einer polierten Oberfläche.

Nach einer weiteren vorteilhaften Ausgestaltung der Erfindung kann das Absperrkörpergehäuse aus Metall oder Kunststoff vorgesehen sein. In diesem Fall ist zusätzlich eine Dichtung zwischen dem Absperrkörper und dem Absperrkörpergehäuse einerseits und zwischen dem Absperrkörpergehäuse und dem Ventilsitz andererseits notwendig.

Nach einer weiteren vorteilhaften Ausgestaltung der Erfindung besteht das Absperrkörpergehäuse aus zwei Teilen, welche durch eine beide Teile von außen zumindest teilweise umschließende Hülse zusammengehalten werden. Zur Montage der Einzelteile zu einem Hahn-Einsatz werden die beiden Teile um den Absperrkörper gelegt und durch die Hülse an dem Absperrkörper fixiert. Die beiden Teile weisen einen Innenkontur auf, die an die Form des Absperrkörpers angepaßt ist. Im zusammengefügten Zustand bildet der Hahn-Einsatz eine Einheit, die komplett in ein Ventilgehäuse eingesetzt werden kann. Aufgrund seiner kompakten Bauweise hat das Absperrkörpergehäuse eine geringe Baugröße und kann daher auch in Ventilgehäuse mit geringer Einbautiefe eingesetzt werden.

Vorteilhafterweise bestehen die beiden Teile des Absperrkörpergehäuses aus Teflon und die Hülse aus Messing. Daneben sind auch noch weitere Materialien möglich.

Nach einer weiteren vorteilhaften Ausgestaltung der Erfindung ist als Absperrkörper eine Kugel vorgesehen. Darüber hinaus kann der Absperrkörper auch die Form eines Kegels oder eines Zylinders aufweisen.

Weitere Vorteile und vorteilhafte Ausgestaltungen der Erfindung sind der nachfolgenden Beschreibung, der Zeichnung und den Ansprüchen entnehmbar.
- Fig. 1: Ventilgehäuse mit Hahn-Einsatz gemäß einem ersten Ausführungsbeispiel,
- Fig. 2: Ventilgehäuse mit Hahn-Einsatz gemäß einem zweiten Ausführungsbeispiel,

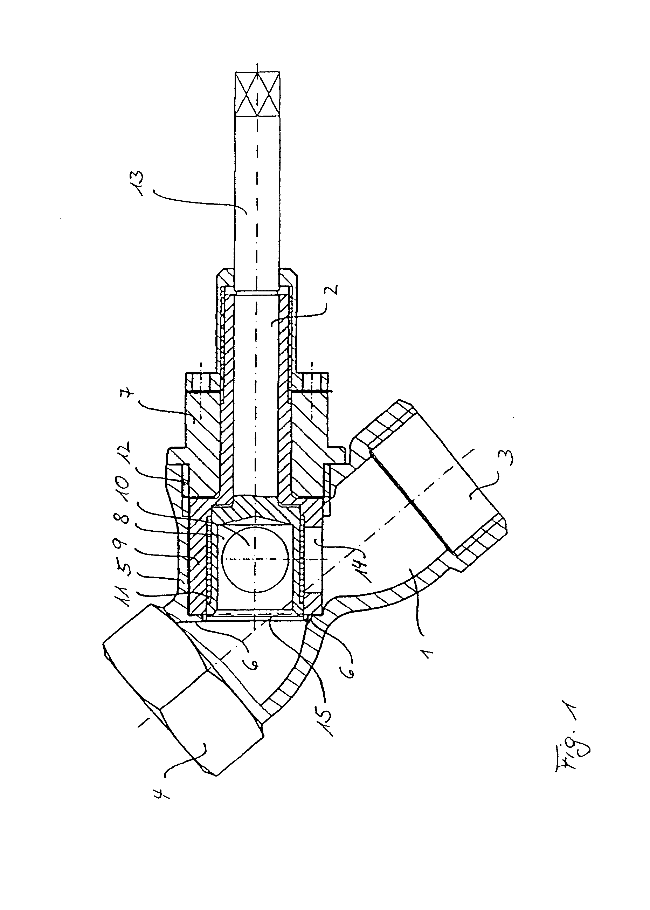

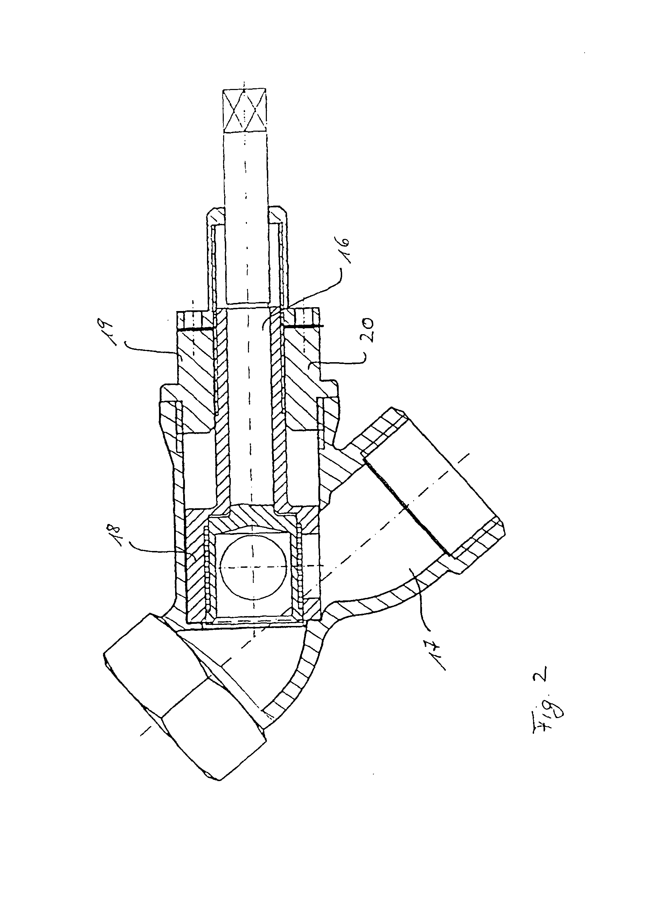

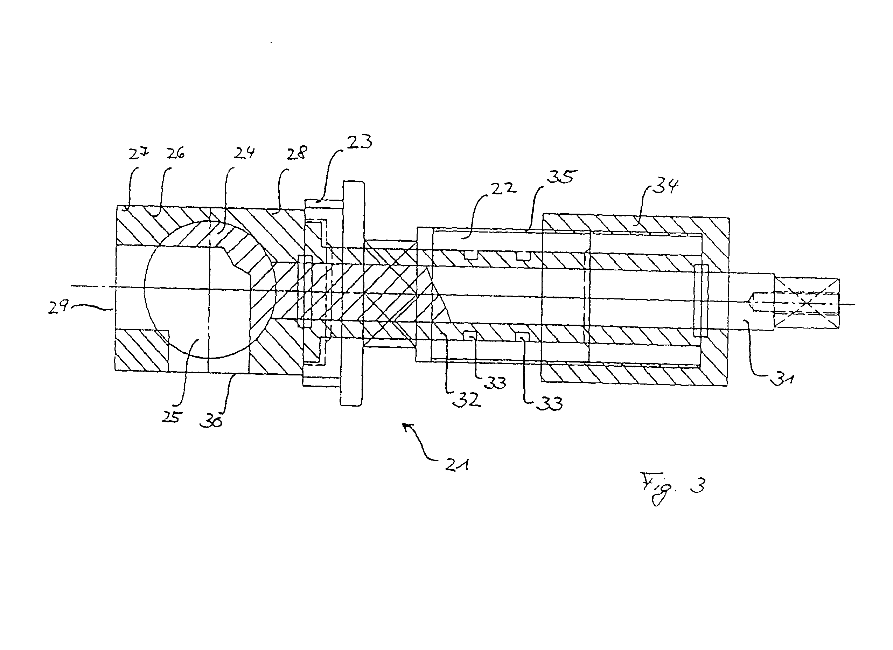

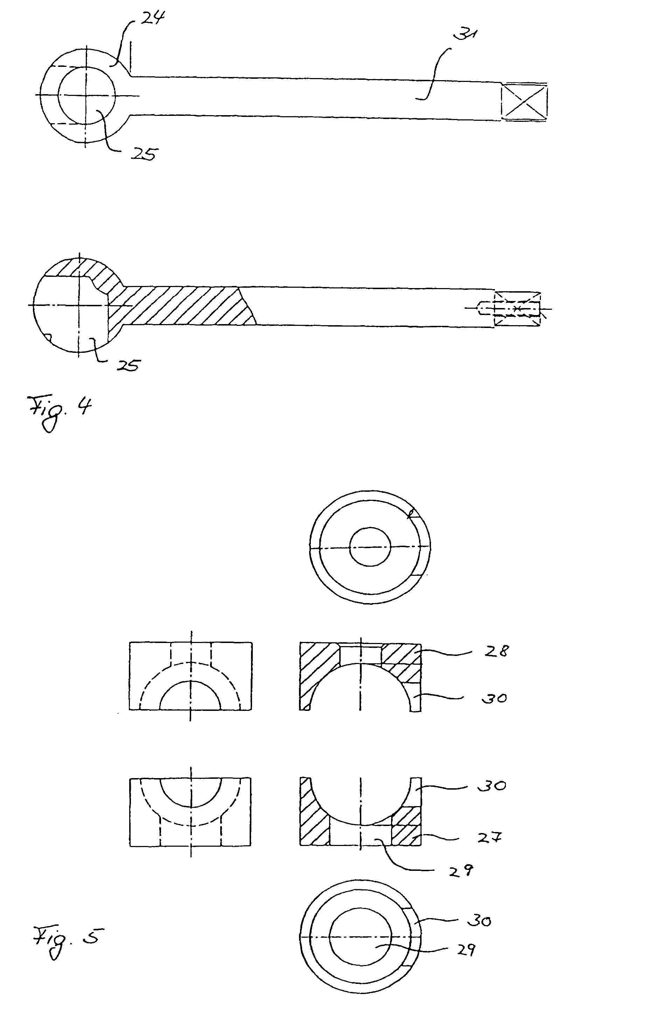

Die Figuren 1 und 2 zeigen keinen Hahn-Einsatz gemäß Erfindung

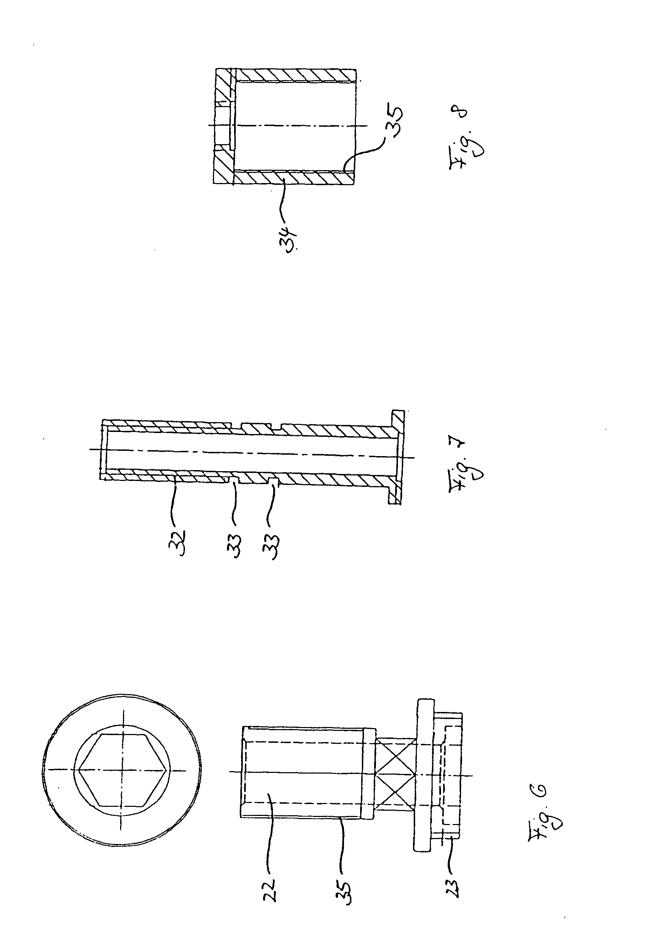

- Fig. 3: Hahn-Einsatz gemäß Erfindung in Schnittdarstellung (drittes Ausführungsbeispiel),

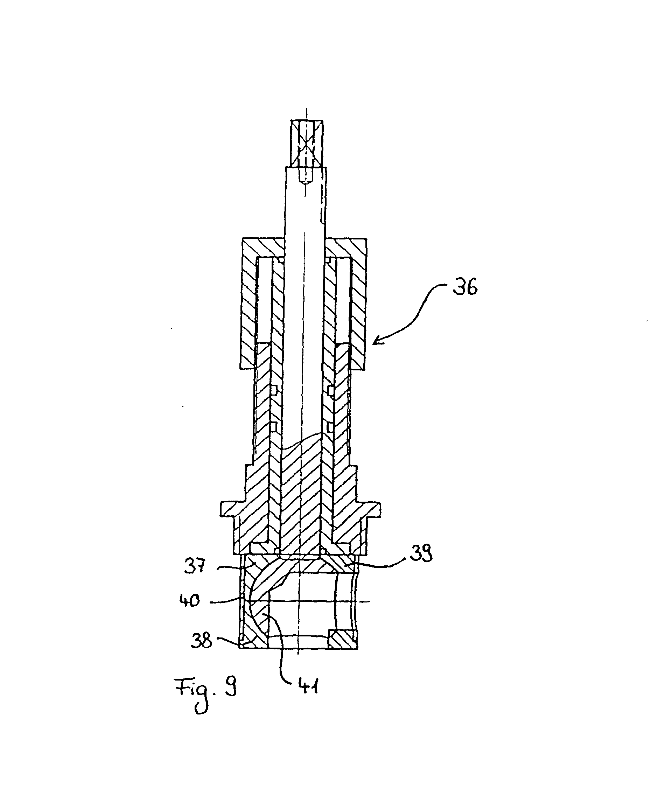

- Fig. 4: Kugel mit Kugelstift des Hahn-Einsatzes gemäß Figur 3,
- Fig. 5: Absperrkörpergehäuse des Hahn-Einsatzes gemäß Figur 3,
- Fig. 6: Vorrichtung zum Verbinden mit dem Ventilgehäuses zu dem Hahn-Einsatz gemäß Figur 3,
- Fig. 7: erste Hülse des Hahn-Einsatzes gemäß Fig. 3
- Fig. 8: zweite Hülse des Hahn-Einsatzes gemäß Fig. 3
- Fig. 9: Hahn-Einsatz gemäß Erfindung in Schnittdarstellung viertes Ausführungsbeispiel.

In Figur 1 ist ein Ventilgehäuse 1 mit einem Hahn-Einsatz 2 im Schnitt dargestellt. Das Ventilgehäuse 1 weist an seinen Enden Anschlußstücke 3 und 4 zum Verbinden mit einer Rohrleitung auf. Außerdem ist eine Aufnahme 5 mit einem in der Zeichnung nicht dargestellten Innengewinde vorgesehen, in welches üblicherweise ein Ventileinsatz eingeschraubt werden kann. Für einen Ventilteller eines Ventileinsatzes ist an dem Ventilgehäuse 1 ein Ventilsitz 6 vorgesehen. Anstelle eines Ventileinsatzes ist in das Ventilgehäuse ein Hahn-Einsatz 2 eingebaut. Der Hahn-Einsatz 2 besteht im wesentlichen aus einer Vorrichtung 7 zum Verbinden des Hahn-Einsatzes mit dem Ventilgehäuse 1, einem Absperrkörper 8 und einem Absperrkörpergehäuse 9. Der Absperrkörper hat eine zylindrische Form und weist seitlich und in achsialer Richtung jeweils eine kreisrunde Öffnung 10 für den Durchgangskanal auf. Zwischen dem Absperrkörper 8 und dem Absperrkörpergehäuse 9 befindet sich eine Dichtung 11. An der Außenseite der Vorrichtung zum Verbinden ist ein Außengewinde 12 vorgesehen. Zur Betätigung des Hahn-Einsatzes von Hand ist an dem zylindrischen Absperrkörper ein Stift 13 vorgesehen, an dessen dem Absperrkörper abgewandtem Ende ein in der Zeichnung nicht dargestellter Handhebel angebracht werden kann. Das Absperrkörpergehäuse 9 sitzt dichtend auf dem Ventilsitz 6 auf. Hierzu kann zwischen dem Absperrkörpergehäuse und dem Ventilsitz zusätzlich eine in der Zeichnung nicht dargestellte Dichtung vorgesehen sein. In dem Absperrkörpergehäuse 9 sind Einlaß- bzw. Auslaßöffnungen 14 und 15 vorgesehen, durch die das in dem Ventilgehäuse 1 geführte Medium bei geöffneter Stellung des Absperrkörpers durch den Hahn hindurchströmen kann. Befindet sich der Absperrkörper jedoch in Schließstellung, so ist die Rohrleitung durch den Hahn-Einsatz 2 dicht verschlossen. Das Medium kann den Hahn daher nicht passieren.

In Figur 2 ist ein weiteres Ausführungsbeispiel eines Hahn-Einsatzes 16 in einem Ventilgehäuse 17 dargestellt. Dieses Ausführungsbeispiel unterscheidet sich von dem in Figur 1 dargestellten ersten Ausführungsbeispiel lediglich dadurch, daß der Abstand zwischen Absperrkörpergehäuse 18 und der Vorrichtung 19 zum Verbinden mit dem Ventilgehäuse 17 größer ist. Alle übrigen Teile stimmen mit denjenigen aus Fig. 1 überein. Der Hahn-Einsatz kann so ausgestaltet sein, daß er hinsichtlich seiner Länge an unterschiedliche Ventilgehäuse angepaßt werden kann. Hierzu ist ein aus dem Ventilgehäuse 17 herausragender Teil 20 gegenüber dem Absperrkörpergehäuse hinsichtlich seines Abstandes veränderbar.

In Figur 3 ist ein drittes Ausführungsbeispiel eines Hahn-Einsatzes 21 im Querschnitt dargestellt. Die Vorrichtung 22 zum Verbinden des Hahn-Einsatzes mit dem Ventilgehäuse ist an der Außenseite mit einem Außengewinde 23 ausgestattet. Der Absperrkörper besteht aus einer Kugel 24 mit einem Durchgangskanal 25. Das Absperrkörpergehäuse 26 hat eine zylindrische Form und besteht aus zwei Teilen 27 und 28, die die Kugel 24 schalenartig umschließen. Beide Teile bestehen aus Teflon und dienen damit gleichermaßen als Führung der Kugel, als Dichtung und als Verschluß des Durchgangskanals in Schließstellung. In den beiden Teilen 27 und 28 sind an den Durchgangskanal 25 angepaßte Öffnungen 29 und 30 vorgesehen, welche in Öffnungsstellung des Absperrkörpers ein Strömen des Mediums durch den Hahn-Einsatz ermöglichen. Zum manuellen Betätigen der Kugel ist ein Kugelstift 31 vorgesehen, an dessen der Kugel abgewandtem Ende eine Betätigungsvorrichtung, beispielsweise ein Handhebel angebracht werden kann. Der Kugelstift 31 ist in einer ersten Hülse 32 geführt. Die Hülse verläuft innerhalb der Vorrichtung 22. An der Außenseite der ersten Hülse sind Nuten 33 für Gleitringe vorgesehen. An dem der Kugel abgewandten Ende der ersten Hülse 32 greift eine zweite Hülse 34 an der ersten Hülse an. Die zweite Hülse ist über ein Feingewinde 35 an der Außenseite der Vorrichtung 22 zum Verbinden geführt. Durch Aufschrauben der zweiten Hülse 34 auf die Vorrichtung 22 wird die erste Hülse innerhalb der Vorrichtung 22 verschoben. Dadurch ändert sich der Abstand zwischen dem Absperrkörpergehäuse 26 und der Vorrichtung 22. Auf diese Weise kann der Hahn-Einsatz 21 in seiner Länge verändert und an unterschiedliche Ventilgehäuse hinsichtlich der Entfernung zwischen Aufnahme des Einsatzes und Ventilsitz angepaßt werden. Zum Einbau des Hahn-Einsatzes 21 in ein Ventilgehäuse wird zunächst der Abstand zwischen Absperrkörpergehäuse 26 und Vorrichtung 22 minimiert. Anschließend wird der Hahn-Einsatz 21 mit dem Außengewinde 23 in das Ventilgehäuse eingeschraubt. Schließlich wird die zweite Hülse 34 auf die Vorrichtung 22 aufgeschraubt, bis das Absperrkörpergehäuse 26 auf dem Ventilsitz des Ventilgehäuses aufsitzt. Die Einstellung der zweiten Hülse 34 wird, solange der Hahn-Einsatz eingebaut bleibt, nicht mehr verändert.

Die einzelnen Teile des Hahn-Einsatzes 21 sind in den Fig. 4 bis 8 dargestellt.

In Fig. 9 ist ein viertes Ausführungsbeispiel eines Hahn-Einsatzes 36 im Querschnitt dargestellt. Dieser Hahn-Einsatz stimmt im wesentlichen mit dem Hahn-Einsatz gemäß Fig. 3 überein. Im Unterschied zu dem Hahn-Einsatz gemäß Fig. 3 besteht das Absperrkörpergehäuse aus zwei kleineren Teilen 38 und 39, die durch eine Hülse 40 zusammengehalten werden. Damit ist das Absprerrkörpergehäuse 37 nur unwesentlich größer als der Durchmesser des kugelförmigen Absperrkörpers 41. Der Hahn-Einsatz hat damit eine relativ geringe Baugröße und kann auch in kurze Ventilgehäuse eingesetzt werden.

### Bezugszahlenliste

- 1: Ventilgehäuse
- 2: Hahn-Einsatz
- 3: Anschlußstück
- 4: Anschlußstück
- 5: Aufnahme
- 6: Ventilsitz
- 7: Vorrichtung zum Verbinden
- 8: Absperrkörper
- 9: Absperrkörpergehäuse
- 10: Öffnung des Durchgangskanals
- 11: Dichtung
- 12: Außengewinde
- 1 3: Stift
- 14: Einlaß- bzw. Auslaßöffnung
- 15: Einlaß- bzw. Auslaßöffnung
- 1 6: Hahn-Einsatz
- 1 7: Ventilgehäuse
- 18: Absperrkörpergehäuse
- 19: Vorrichtung zum Verbinden
- 20: Teil des Hahn-Einsatzes
- 21: Hahn-Einsatz
- 2 2: Vorrichtung zum Verbinden
- 23: Außengewinde
- 24: Kugel
- 25: Durchgangskanal
- 26: Absperrkörpergehäuse
- 27: Teil des Absperrkörpergehäuses
- 28: Teil des Absperrkörpergehäuses
- 29: Öffnung
- 30: Öffnung
- 31: Kugelstift
- 32: erste Hülse
- 33: Nut
- 34: zweite Hülse
- 3 5: Feingewinde
- 3 6: Hahn-Einsatz
- 37: Absperrkörpergehäuse
- 38: Teil des Absperrkörpergehäuses
- 39: Teil des Absperrkörpergehäuses
- 40: Hülse
- 41: Absperrkörper

## Patentansprüche

1. Hahn-Einsatz zum Verschließen oder Abtrennen von Rohrleitungen, welcher in ein mit der Rohrleitung verbundenes Gehäuse einsetzbar ist,
mit einer Vorrichtung (22) zum Verbinden des Hahn-Einsatzes mit dem Gehäuse,
mit einem drehbar in der Vorrichtung (22) gelagerten und mit einem Durchgangskanal (25) versehenen Absperrkörper (24),
mit einer Betätigungsvorrichtung zum Drehen des Absperrkörpers,
mit einem den Absperrkörper (24) umgebenden und den Durchgangskanal (25) in Schließstellung verschließenden Absperrkörpergehäuse (26),
wobei der Hahn-Einsatz in ein Ventilgehäuse (1, 17) für Ventileinsätze mit Ventilteller einsetzbar ist,
wobei die Vorrichtung (22) zum Verbinden an ihrer Außenseite ein Außengewinde (23) aufweist, welches in das Ventilgehäuse einschraubbar ist, und
wobei das Absperrkörpergehäuse (26) an der Außenseite Anschlagsflächen aufweist, mit denen es dichtend an den für den Ventilteller eines Ventileinsatzes vorgesehenen Ventilsitz (6) des Ventilgehäuses (1, 17) anliegt,
**dadurch gekennzeichnet,**
**daß** zum Verstellen der Länge des Hahn-Einsatzes in der Vorrichtung (22) zum Verbinden des Hahn-Einsatzes (21) mit dem Ventilgehäuse eine erste Hülse (32) geführt ist, und daß an dem aus dem Ventilgehäuse herausragenden Ende der Vorrichtung (22) zum Verbinden eine zweite mit einem Gewinde (35) versehene und an der ersten Hülse angreifende Hülse (34) vorgesehen ist.

2. Hahn-Einsatz nach Anspruch 1, **dadurch gekennzeichnet, daß** das Absperrkörpergehäuse (26) aus einem Dichtungsmaterial besteht.

3. Hahn-Einsatz nach Anspruch 1, **dadurch gekennzeichnet, daß** das Absperrkörpergehäuse (8, 18) aus Metall oder Kunststoff besteht, und daß an dem Absperrkörpergehäuse eine Dichtung (11) vorgesehen ist.

4. Hahn-Einsatz nach Anspruch 2 oder 3, **dadurch gekennzeichnet, daß** das Dichtungsmaterial oder die Dichtung aus Teflon besteht.

5. Hahn-Einsatz nach einem der vorhergehenden Ansprüche, **dadurch gekennzeichnet, daß** das Absperrkörpergehäuse (37) aus zwei Teilen (38, 39) besteht, welche durch eine beide Teile von außen zumindest teilweise umschließende Hülse (40) zusammengehalten werden.

6. Hahn-Einsatz nach Anspruch 5, **dadurch gekennzeichnet, daß** die beiden Teile (38, 39) des Absperrkörpergehäuses (37) aus Teflon und die Hülse (40) aus Messing bestehen.

7. Hahn-Einsatz nach einem der vorhergehenden Ansprüche, **dadurch gekennzeichnet, daß** als Absperrkörper eine Kugel (24) vorgesehen ist.

8. Hahn-Einsatz nach einem der Ansprüche 1 bis 6, **dadurch gekennzeichnet, daß** als Absperrkörper ein Kegel oder ein Zylinder vorgesehen ist.

## Claims

1. Tap insert used to close or separate conduits, which can be installed in a housing that is connected to the conduit, with a device (22) to connect the tap insert to housing, with a shut off body (24) that is supported in the device (22) so as to be able to rotate and which is provided with a through channel (25), with an actuating device that is used to turn the shut off body, with a shut off body housing (26) that surrounds the shut off body (24) and which closes the through channel (25) when in the closed position,
the tap insert can be inserted into a valve housing (1,17) for valve inserts with a valve head; in that there is an outside thread (23) on the connecting device (22) that can be screwed into the valve housing,
the shut off body housing (26) has stop surfaces on its exterior that lie on the valve seat (6) of the valve housing (1, 17) that is provided for the valve head of a valve insert,
**characterized in that**,
the length of the of the tap insert can be adjusted **in that** a first sleeve (32) is guided in the device (22) for connecting the tap insert (21) to the valve housing; and **in that** on the end of the connecting device (22) that extends from the valve housing there is a second sleeve (34) that has a thread (35) and fits on the first sleeve.

2. Tap insert as defined in Claim 1, **characterized in that** the shut of body housing (26) is of a sealing material.

3. Tap insert as defined in Claim 1, **characterized in that** the shut off body housing (8, 18) is of metal or plastic; and **in that** a seal (11) is provided on the shut off body housing.

4. Tap insert as defined in Claim 2 or Claim 3, **characterized in that** the seal is of Teflon.

5. Tap insert as defined in one of the preceding claims, **characterized in that** the shut off body housing (37) consists of two parts (38, 39) that are held together by a sleeve (40) that encloses both paths from the outside, at least in part.

6. Tap insert as defined in Claim 5, **characterized in that** the two parts (38, 39) of the shut off body housing (37) are of Teflon and the sleeve (40) is of brass.

7. Tap insert as defined in one of the preceding claims, **characterized in that** a ball (24) is provided as the shut off body.

8. Tap insert as defined in one of the Claims 1 to 6, **characterized in that** a cone or a cylinder is provided as the shut off body.

## Revendications

1. Insert de robinet permettant d'obturer ou de fermer des canalisations et pouvant être inséré dans un corps de robinet relié à la canalisation,
doté d'un dispositif (22) permettant de raccorder l'insert de robinet au corps de robinet,
doté d'un obturateur (24) positionné de façon à pouvoir pivoter dans le dispositif (22) et comportant un canal de passage (25),
doté d'un dispositif actionneur permettant de faire tourner l'obturateur,
doté d'un carter d'obturateur (26) entourant l'obturateur (24) et obturant le canal de passage (25) en position fermée,
l'insert de robinet pouvant être inséré dans un corps de vanne (1, 17) pour garnitures de vanne avec tête de vanne,
le dispositif (22) comportant sur sa face extérieure, pour assurer le raccordement, un filet (23) que l'on peut visser dans le corps de vanne, et
le carter d'obturateur (26) présentant, sur sa face extérieure, des surfaces de contact grâce auxquelles il adhère, tout en assurant l'étanchéité, contre le siège de vanne (6) du corps de vanne (1, 17) prévu pour la tête de vanne d'une garniture de vanne,
**caractérisé par le fait**
**que**, pour faire varier la longueur de l'insert de robinet, une première douille (32) est prévue dans le dispositif (22) assurant le raccordement de l'insert de robinet (21) au corps de vanne et que, à l'extrémité du dispositif (22) faisant saillie du corps de vanne, une deuxième douille (34), dotée d'un filet (35) et mordant dans la première douille, est prévue pour assurer le raccordement.

2. Insert de robinet aux termes de la revendication 1, **caractérisé par le fait que** le carter d'obturateur (26) consiste en un matériau d'étanchéité.

3. Insert de robinet aux termes de la revendication 1, **caractérisé par le fait que** le carter d'obturateur (8, 18) est fait de métal ou de matière plastique et qu'un joint (11) est prévu sur le carter d'obturateur.

4. Insert de robinet aux termes de la revendication 2 ou 3, **caractérisé par le fait que** le matériau d'étanchéité ou le joint est fait de Téflon.

5. Insert de robinet aux termes de l'une des revendications susmentionnées, **caractérisé par le fait que** le carter d'obturateur (37) se compose de deux éléments (38, 39) maintenus en place par une douille (40) enserrant tout au moins partiellement les deux éléments de l'extérieur.

6. Insert de robinet aux termes de la revendication 5, **caractérisé par le fait que** les deux éléments (38, 39) du carter d'obturateur (37) sont faits de Téflon et la douille (40) de laiton.

7. Insert de robinet aux termes de l'une des revendications susmentionnées, **caractérisé par le fait qu'**une boule (24) est prévue comme obturateur.

8. Insert de robinet aux termes de l'une des revendications 1 à 6, **caractérisé par le fait qu'**un cône ou un cylindre est prévu comme obturateur.
